# EUROPÄISCHE PATENTSCHRIFT

(11) **EP 3 794 416 B1**
(45) Veröffentlichungstag und Bekanntmachung des Hinweises auf die Patenterteilung: **19.08.2026**
(21) Anmeldenummer: 19739908.2
(22) Anmeldetag: 26.06.2019
(51) Int. Cl.: G05B 13/02, G06N 3/09, G06N 3/092

(54) **STEUEREINRICHTUNG ZUM STEUERN EINES TECHNISCHEN SYSTEMS UND VERFAHREN ZUM KONFIGURIEREN DER STEUEREINRICHTUNG**
CONTROL SYSTEM FOR CONTROLLING A TECHNICAL SYSTEM AND METHOD FOR CONFIGURING THE CONTROL DEVICE
DISPOSITIF DE COMMANDE DESTINÉ À LA COMMANDE D'UN SYSTÈME TECHNIQUE ET PROCÉDÉ DE CONFIGURATION DU DISPOSITIF DE COMMANDE

(30) Priorität: 27.06.2018 EP 18180156
(43) Veröffentlichungstag der Anmeldung: 24.03.2021
(73) Patentinhaber: Siemens Aktiengesellschaft, 80333 München (DE)
(72) Erfinder: DÜLL, Siegmund, 80336 München (DE); HEESCHE, Kai, 81539 München (DE); STERZING, Volkmar, 85579 Neubiberg (DE); WEBER, Marc Christian, 80339 München (DE)
(74) Vertreter: Siemens Patent Attorneys
(86) Internationale Anmeldenummer: PCT/EP2019/067036
(87) Internationale Veröffentlichungsnummer: WO 2020/002447

(56) Entgegenhaltungen:
- DE-A1- 102010 011 221
- DE-A1- 102016 224 207
- LENNART LJUNG: "System Identification Toolbox", 2001, Retrieved from the Internet <URL:https://instruct.uwo.ca/engin-sc/391b/downloads/IDENT_TB.PDF> [retrieved on 20221222]
- LENNART LJUNG: "System Identification Toolbox", 2012, Retrieved from the Internet <URL:https://www.researchgate.net/publication/37405937_System_Identification_Toolbox_for_use_with_MATLAB> [retrieved on 20221222]
- IVO HOUTZAGER: "Towards Data-Driven Control for Modern Wind Turbines", 2011, Retrieved from the Internet <URL:https://www.dcsc.tudelft.nl/~jwvanwingerden/documents/houtzager_thesis.pdf> [retrieved on 20221222]
- VENUGOPAL K P ET AL: "A recurrent neural network controller and learning algorithm for the on-line learning control of autonomous underwater vehicles", NEURAL NETWORKS, ELSEVIER SCIENCE PUBLISHERS, BARKING, GB, vol. 7, no. 5, 1 January 1994 (1994-01-01), pages 833 - 846, XP024392946, ISSN: 0893-6080, [retrieved on 19940101], DOI: 10.1016/0893-6080(94)90104-X
- PSALTIS D ET AL: "A multilayered neural network controller", IEEE CONTROL SYSTEMS MAGAZINE, IEEE SEWRVICE CENTER, PISCATAWAY, NJ, US, vol. 8, no. 2, 1 April 1988 (1988-04-01), pages 17 - 21, XP011417106, ISSN: 0272-1708, DOI: 10.1109/37.1868
- YANG FAN ET AL: "Learning What Data to Learn", 27 February 2017 (2017-02-27), XP055476976, Retrieved from the Internet <URL:https://arxiv.org/pdf/1702.08635.pdf> [retrieved on 20181203]
- JIE CAI ET AL: "Feature selection in machine learning: A new perspective", NEUROCOMPUTING, vol. 300, 9 March 2018 (2018-03-09), AMSTERDAM, NL, pages 70 - 79, XP055529887, ISSN: 0925-2312, DOI: 10.1016/j.neucom.2017.11.077
- KISHAN MALADKAR: "How To Get Started With Preparing Data For Machine Learning", 1 February 2018 (2018-02-01), XP002787062, Retrieved from the Internet <URL:https://www.analyticsindiamag.com/get-started-preparing-data-machine-learning/> [retrieved on 20181204]
- SAURAV KAUSHIK: "Introduction to Feature Selection methods with an example (or how to select the right variables?)", 1 December 2016 (2016-12-01), XP002787063, Retrieved from the Internet <URL:https://www.analyticsvidhya.com/blog/2016/12/introduction-to-feature-selection-methods-with-an-example-or-how-to-select-the-right-variables/> [retrieved on 20181204]
- JASON BROWNLEE: "How to Prepare Data For Machine Learning", 25 December 2013 (2013-12-25), XP002787068, Retrieved from the Internet <URL:https://machinelearningmastery.com/how-to-prepare-data-for-machine-learning/> [retrieved on 20181204]

## Beschreibung

Komplexe technische Systeme wie z.B. Gasturbinen, Windturbinen, Solarkraftwerke, Verbrennungskraftmaschinen, Fertigungsanlagen oder Stromnetze benötigen für einen produktiven Betrieb in der Regel eine aufwendige Konfiguration, um beispielsweise einen Ertrag, einen Ressourcenbedarf, einen Wirkungsgrad, einen Schadstoffausstoß, eine Stabilität, einen Verschleiß und/oder andere Zielparameter des technischen Systems gezielt zu optimieren.

Zeitgemäße Steuereinrichtungen von technischen Systemen verwenden zur Konfiguration häufig Verfahren des maschinellen Lernens. Mittels derartiger Lernverfahren kann eine Steuereinrichtung anhand von Trainingsdaten darauf trainiert werden, ausgehend von aktuellen Betriebsdaten des technischen Systems diejenigen Steueraktionen zum Steuern des technischen Systems zu ermitteln, die spezifisch ein gewünschtes oder anderweitig optimales Verhalten des technischen Systems bewirken. Zu diesen Zwecken steht eine Vielzahl bekannter Lernverfahren, wie z.B. Verfahren des bestärkenden Lernens zur Verfügung. Als Trainingsdaten können dabei insbesondere historische und/oder aktuelle Betriebsdaten des technischen Systems oder ähnlicher technischer Systeme verwendet werden.

Bei bekannten Lernverfahren wird für ein erfolgreiches Training in der Regel eine große Menge von Trainingsdaten benötigt, die zudem die Betriebsbedingungen des technischen Systems möglichst repräsentativ abdecken sollten. Eine zu geringe Menge an repräsentativen Trainingsdaten oder eine zu geringe Abdeckung von relevanten Betriebsbedingungen kann sich negativ auf einen Trainingserfolg auswirken.

Aus der Offenlegungsschrift DE 10 2016 224 207 A1 ist ein Verfahren zum Steuern eines technischen Systems bekannt, bei dem lernbasierte Steuermodelle kaskadiert werden, wodurch eine Trainingszeit in vielen Fällen verkürzt werden kann.

Es ist Aufgabe der vorliegenden Erfindung, eine Steuereinrichtung zum Steuern eines technischen Systems sowie ein Verfahren zum Konfigurieren der Steuereinrichtung anzugeben, die ein effizienteres Training erlauben.

Gelöst wird diese Aufgabe durch ein Verfahren mit den Merkmalen des Patentanspruchs 1, durch eine Steuereinrichtung mit den Merkmalen des Patentanspruchs 12, durch ein Computerprogrammprodukt mit den Merkmalen des Patentanspruchs 13 sowie durch ein computerlesbares Speichermedium mit den Merkmalen des Patentanspruchs 14.

Zum Konfigurieren einer Steuereinrichtung für ein technisches System mittels eines maschinellen Lernverfahrens wird eine zeitliche Abfolge von Trainingsdaten für das maschinelle Lernverfahren erfasst. Die Trainingsdaten umfassen hierbei Zustände des technischen Systems spezifizierende Zustandsdaten sowie Steueraktionen des technischen Systems spezifizierende Steueraktionsdaten. Das technische System kann insbesondere eine Gasturbine, eine Windturbine, ein Solarkraftwerk, eine Verbrennungskraftmaschine, eine Fertigungsanlage, ein Verkehrsleitsystem, eine Energiesteuerung für ein Gebäude, ein Energieübertragungsnetz oder ein 3d-Drucker sein. Aus den Trainingsdaten wird eine zeitliche Abfolge der Steueraktionsdaten spezifisch extrahiert und auf eine zeitliche Veränderung geprüft. Bei Feststellen einer zeitlichen Veränderung wird ein diese Veränderung umfassendes Zeitfenster ermittelt und die innerhalb des Zeitfensters befindlichen Trainingsdaten werden zeitfensterspezifisch extrahiert. Die Steuereinrichtung wird dann mittels des maschinellen Lernverfahrens anhand der extrahierten Trainingsdaten trainiert und damit zum Steuern des technischen Systems konfiguriert. Dabei werden außerhalb des Zeitfensters befindliche Trainingsdaten beim Trainieren der Steuereinrichtung unterdrückt oder verworfen oder sie werden geringer gewichtet als die extrahierten Trainingsdaten.

Zum Ausführen des erfindungsgemäßen Verfahrens sind eine Steuereinrichtung, ein Computerprogrammprodukt sowie ein computerlesbares Speichermedium vorgesehen.

Das erfindungsgemäße Verfahren sowie die erfindungsgemäße Steuereinrichtung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Insofern ein jeweiliges Zeitfenster gezielt so ermittelt wird, dass es eine zeitliche Veränderung von Steueraktionsdaten umfasst, ist zu erwarten, dass die im Zeitfenster enthalten Trainingsdaten überdurchschnittlich viel Information über Auswirkungen von Steuereingriffen auf Zustände des technischen System beinhalten. Es erweist sich, dass durch die spezifische Extraktion von innerhalb des Zeitfensters befindlichen Trainingsdaten und deren bevorzugter Nutzung zum Training der Steuereinrichtung Wirkungszusammenhänge zwischen Steuereingriffen und deren Auswirkungen oft erheblich schneller und effizienter gelernt werden können. In vielen Fällen kann entgegen einer verbreiteten Lehrmeinung beobachtet werden, dass ein auf spezifisch selektierte Trainingsdaten beschränktes Training effizienter ist als ein Training mit allen Trainingsdaten. Häufig können weniger relevante oder redundante Trainingsdaten einen Trainingserfolg sogar verschlechtern.

Vorteilhafte Ausführungsformen und Weiterbildungen der Erfindung sind in den abhängigen Ansprüchen angegeben.

Vorteilhafterweise kann das maschinelle Lernverfahren ein Verfahren des bestärkenden Lernens, ein künstliches neuronales Netz, ein rekurrentes neuronales Netz, ein faltendes neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum verwenden oder implementieren. Für die angegebenen Varianten steht eine Vielzahl von effizienten Implementierungen zur Verfügung. Durch die Erfindung kann insbesondere eine Stabilität und Konvergenz einer sog. Q-Funktion bei Verfahren des bestärkenden Lernens verbessert werden. Derartige Verfahren des bestärkenden Lernens werden häufig auch als Reinforcement Learning bezeichnet.

Nach einer vorteilhaften Weiterbildung der Erfindung können Betriebsdaten des technischen Systems im laufenden Betrieb erfasst und in die Abfolge der Trainingsdaten integriert werden. Die Steuereinrichtung kann dann anhand der extrahierten Trainingsdaten im laufenden Betrieb weitertrainiert werden; insbesondere während die Steuereinrichtung das technische System steuert. Auf diese Weise kann die Steuereinrichtung an im Betrieb entstehende, z.B. verschleißbedingte Veränderungen im Verhalten des technischen Systems angepasst werden. Alternativ oder zusätzlich kann die Steuereinrichtung zumindest teilweise vorab oder offline trainiert werden.

Weiterhin kann bei der Prüfung auf zeitliche Veränderung der Abfolge der Steueraktionsdaten ein vorgegebenes Veränderungsmuster in dieser Abfolge, z.B. mittels eines Mustererkennungsverfahrens gesucht werden. Infolge eines Auffindens des Veränderungsmusters kann dann die zeitliche Veränderung festgestellt werden.

Darüber hinaus kann bei der Prüfung auf zeitliche Veränderung der Abfolge der Steueraktionsdaten ein Veränderungsmaß abhängig von einem Vergleich, einer Differenzbildung, einer gewichteten Differenzbildung und/oder einem Differenzenquotienten von verschiedenen Zeiten zugeordneten Steueraktionsdaten ermittelt werden. Die Feststellung einer zeitlichen Veränderung kann dann anhand des ermittelten Veränderungsmaßes erfolgen. Als Veränderungsmaß kann insbesondere ein Absolutbetrag oder ein Quadrat einer Differenz oder eines Differenzenquotienten aufeinanderfolgender Steueraktionsdaten berechnet werden. Dabei können auch höhere Differenzenquotienten berücksichtigt werden. Durch das Veränderungsmaß kann die jeweilige zeitliche Veränderung quantifiziert werden.

Für den Fall, dass die Steueraktionsdaten jeweils mehrere Komponenten umfassen, kann für die Komponenten der Steueraktionsdaten jeweils ein komponentenspezifisches Veränderungsmaß ermittelt werden. Dabei kann jede dieser Komponenten individuell auf zeitliche Veränderung geprüft werden.

Als Kriterium für die Feststellung einer zeitlichen Veränderung kann eine Überschreitung eines ggf. mehrkomponentigen Schwellwerts durch ein jeweiliges Veränderungsmaß verwendet werden.

Nach einer vorteilhaften Weiterbildung der Erfindung kann eine Rate und/oder eine Amplitude von zeitlichen Veränderungen der Abfolge der Steueraktionsdaten ermittelt werden. Abhängig von der ermittelten Rate und/oder Amplitude kann dann eine Länge des Zeitfensters, ein Schwellwert zum Vergleich mit einem Veränderungsmaß der zeitlichen Veränderungen und/oder ein Veränderungsmuster festgelegt werden. Alternativ oder zusätzlich kann die Länge des Zeitfensters, der Schwellwert und/oder das Veränderungsmuster abhängig von internen Korrelationen oder anderen statistischen Eigenschaften der Steueraktionsdaten oder der Trainingsdaten festgelegt werden.

Nach einer weiteren vorteilhaften Ausführungsform der Erfindung kann eine Zielfunktion bereitgestellt werden, die abhängig von zumindest einem Teil der Zustandsdaten einen im Betrieb des technischen Systems zu optimierenden Performanzparameter ermittelt. Eine solche Zielfunktion wird häufig auch als Belohnungsfunktion oder Reward Function bezeichnet. Die Steuereinrichtung kann dann anhand des in den extrahierten Trainingsdaten enthaltenen Teils der Zustandsdaten darauf trainiert werden, den Performanzparameter zu optimieren. Unter einer Optimierung sei hier und im Folgenden auch eine Annäherung an ein Optimum verstanden. Der Performanzparameter kann insbesondere einen Ertrag, eine Ausbeute, einen Wirkungsgrad, einen Schadstoffausstoß oder einen Ressourcenverbrauch des technischen Systems oder eines Teils davon oder eine ggf. gewichtete Kombination dieser Parameter betreffen. Die Zielfunktion kann den Performanzparameter aus Zustandsdaten oder anderen Betriebsdaten, z.B. Umgebungsdaten des technischen Systems berechnen. Zur Optimierung des Performanzparameters steht eine Vielzahl von bekannten Verfahren insbesondere des bestärkenden Lernens und des überwachten Lernens zur Verfügung.

Weiterhin kann ein Anteil der extrahierten Trainingsdaten an einer Gesamtheit der Trainingsdaten ermittelt werden. Abhängig vom ermittelten Anteil kann dann ein Qualitätsmaß für die Trainingsdaten ermittelt und zum Steuern des technischen Systems ausgegeben werden. Durch ein solches Qualitätsmaß kann gewissermaßen eine für das Training relevante Informationsdichte der Trainingsdaten quantifiziert werden. Falls mehrere Abfolgen von Trainingsdaten verfügbar sind, kann bevorzugt eine Abfolge mit hohem Qualitätsmaß selektiert und zum Training verwendet werden.

Nach einer vorteilhaften Weiterbildung der Erfindung können die extrahierten Trainingsdaten mittels einer Aggregationsfunktion aggregiert werden. Das Training kann dann anhand der aggregierten Trainingsdaten erfolgen. Durch eine solche Aggregation können die Trainingsdaten bzw. die extrahierten Trainingsdaten vorzugsweise zeitfensterspezifisch zusammengefasst oder reduziert werden, z.B. indem fortlaufend ein ggf. gewichteter Mittelwert oder Median, ein Maximum oder ein Minimum mehrerer zeitlich aufeinanderfolgender Trainingsdaten gebildet wird.

Ein Ausführungsbeispiel der Erfindung wird nachfolgend anhand der Zeichnung näher erläutert. Dabei zeigen jeweils in schematischer Darstellung:
- Figur 1: eine Gasturbine mit einer erfindungsgemäßen Steuereinrichtung,
- Figur 2: eine erfindungsgemäße Steuereinrichtung in einer Trainingsphase und
- Figur 3: ein Diagramm mit gegen die Zeit aufgetragenen Trainingsdaten.

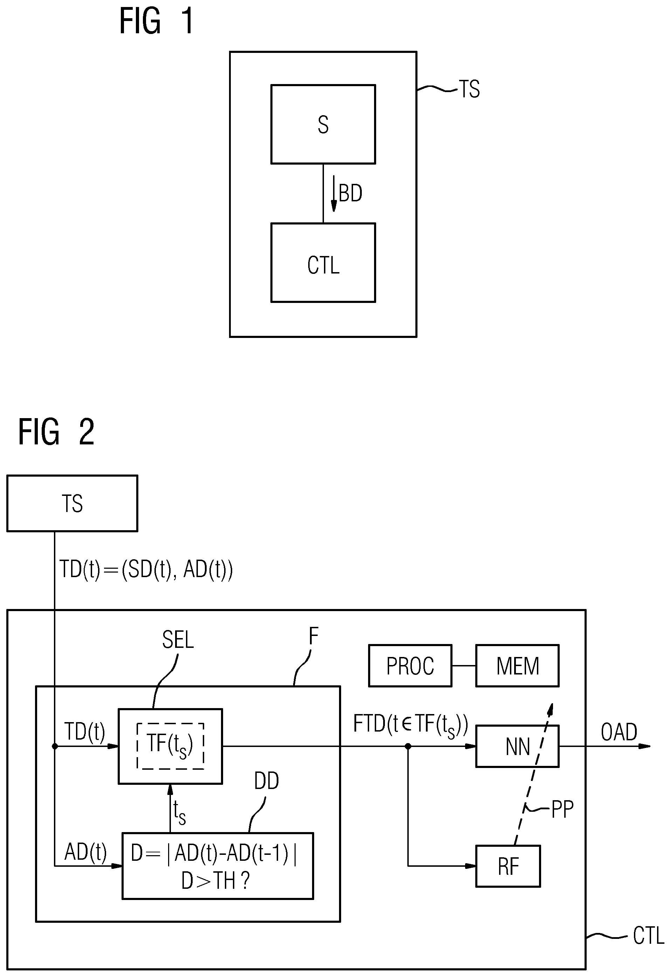

Figur 1 veranschaulicht beispielhaft eine Gasturbine als technisches System TS. Alternativ oder zusätzlich kann das technische System TS auch eine Windturbine, ein Solarkraftwerk, eine Verbrennungskraftmaschine, eine Fertigungsanlage, ein Verkehrsleitsystem, eine Energiesteuerung für ein Gebäude, ein Energieübertragungsnetz, wie z.B. ein Stromnetz, einen 3D-Drucker oder ein anderes System zur additiven Fertigung umfassen.

Die Gasturbine TS ist mit einer rechnergestützt trainierbaren Steuereinrichtung CTL gekoppelt, die als Teil der Gasturbine TS oder ganz oder teilweise extern zur Gasturbine TS implementiert sein kann. Die Steuereinrichtung CTL dient zum Steuern des technischen Systems TS und ist zu diesem Zweck mittels eines maschinellen Lernverfahrens trainierbar. Unter einem Steuern des technischen Systems TS sei hierbei auch eine Regelung des technischen Systems TS sowie eine Ausgabe und Verwendung von steuerungsrelevanten, d.h. zum Steuern des technischen Systems TS beitragenden Daten und Steuersignalen verstanden.

Derartige steuerungsrelevante Daten können insbesondere Steueraktionsdaten, Prognosedaten, Überwachungsdaten und/oder Klassifikationsdaten umfassen, die insbesondere zur Betriebsoptimierung, Überwachung oder Wartung des technischen Systems TS und/oder zur Verschleiß- oder Beschädigungserkennung verwendet werden können.

Die Gasturbine TS verfügt weiterhin über mit der Steuereinrichtung CTL gekoppelte Sensoren S, die fortlaufend einen oder mehrere Betriebsparameter des technischen Systems TS messen und in Form von Betriebsdaten BD zur Steuereinrichtung CTL übermitteln. Neben den Sensordaten können durch die Steuereinrichtung CTL noch weitere Betriebsparameter aus anderen Datenquellen des technischen Systems TS oder aus externen Datenquellen erfasst werden.

Als Betriebsdaten BD sind hier und im Folgenden insbesondere physikalische, regelungstechnische, wirkungstechnische und/oder bauartbedingte Betriebsgrößen, Eigenschaftsdaten, Leistungsdaten, Wirkungsdaten, Zustandsdaten, Systemdaten, Vorgabewerte, Steuerdaten, Sensordaten, Messwerte, Umgebungsdaten, Überwachungsdaten, Prognosedaten, Analysedaten und/oder andere im Betrieb des technischen Systems TS anfallende und/oder einen Betriebszustand oder eine Steueraktion des technischen Systems TS beschreibende Daten zu verstehen. Dies können z.B. Daten über Temperatur, Druck, Emissionen, Vibrationen, Schwingungszustände oder Ressourcenverbrauch des technischen Systems TS sein. Speziell bei einer Gasturbine können die Betriebsdaten BD eine Turbinenleistung, eine Rotationsgeschwindigkeit, Vibrationsfrequenzen oder Vibrationsamplituden betreffen. Die Betriebsdaten BD können skalar, vektorwertig oder tensorwertig und insbesondere hochdimensional sein.

Figur 2 zeigt in schematischer Darstellung eine erfindungsgemäße Steuereinrichtung CTL in einer Trainingsphase, durch die die Steuereinrichtung CTL für eine optimierte Steuerung eines technischen Systems TS konfiguriert wird. Die Steuereinrichtung CTL ist an das technische System TS gekoppelt.

Die Steuereinrichtung CTL sowie das technische System TS können wie in Zusammenhang mit Figur 1 beschrieben, ausgestaltet oder implementiert sein. Die Steuereinrichtung CTL verfügt über einen oder mehrere Prozessoren PROC zum Ausführen aller Verfahrensschritte der Steuereinrichtung CTL sowie über einen oder mehrere mit dem Prozessor PROC gekoppelte Speicher MEM zum Speichern der von der Steuereinrichtung CTL zu verarbeitenden Daten.

Vom technischen System TS wird eine zeitliche Abfolge von Betriebsdaten, die sowohl Zustandsdaten als auch Steueraktionsdaten umfassen, sensorisch erfasst und als Trainingsdaten TD(t) zur Steuerungseinrichtung CTL übermittelt. t bezeichnet hier und im Folgenden eine zeitliche Abhängigkeit einer jeweiligen Größe bzw. deren Zuordnung zu einem jeweiligen Zeitpunkt t.

Die zeitliche Abfolge der Trainingsdaten TD(t) stammt im vorliegenden Ausführungsbeispiel vom technischen System TS. Allgemein können indessen als Trainingsdaten beliebige zum Training verwendbare historische oder aktuelle Betriebsdaten des technischen Systems TS oder ähnlicher technischer Systeme verwendet werden.

Die Trainingsdaten TD(t) enthalten insbesondere eine zeitliche Abfolge von Zustandsdaten SD(t) sowie eine zeitliche Abfolge von Steueraktionsdaten AD(t). Die Zustandsdaten SD(t) spezifizieren hierbei Betriebszustände des technischen Systems TS während die Steueraktionsdaten AD(t) am technischen System TS vorgenommene Steueraktionen spezifizieren. Die Betriebszustände können beispielsweise eine Leistung, eine Drehzahl, eine Temperatur, einen Druck, einen Schwingungszustand und/oder eine Emission des technischen Systems betreffen.

Die Steuereinrichtung CTL verfügt über ein datengetrieben trainierbares Rechenmodul NN, das ein maschinelles Lernverfahren implementiert. Im vorliegenden Ausführungsbeispiel verfügt das trainierbare Rechenmodul NN über ein künstliches neuronales Netz, mittels dessen ein Verfahren des bestärkenden Lernens implementiert wird. Ein solches trainierbares Rechenmodul oder eine entsprechend trainierte Steuereinrichtung wird häufig auch als trainierbarer oder lernender Policy Agent oder als Steuermodell bezeichnet. Das neuronale Netz des Rechenmoduls NN weist eine Trainingsstruktur auf, die sich während eines Trainings ausbildet.

Unter einem Training sei allgemein eine Optimierung einer Abbildung von Eingabeparametern eines parametrisierten Systemmodells, z.B. eines neuronalen Netzes, auf einen oder mehrere Ausgabeparameter verstanden. Diese Abbildung wird nach vorgegebenen, gelernten und/oder zu lernenden Kriterien während einer Trainingsphase optimiert. Als Kriterium kann z.B. bei Steuermodellen ein Erfolg von Steueraktionen herangezogen werden, der z.B. einen Ertrag, einen Ressourcenbedarf, einen Schadstoffausstoß, einen Verschleiß oder einen anderen eine Performanz des technischen Systems quantifizierenden Parameter betreffen kann. Eine Trainingsstruktur kann z.B. eine Vernetzungsstruktur von Neuronen eines neuronalen Netzes und/oder Gewichte von Verbindungen zwischen den Neuronen umfassen, die durch das Training so ausgebildet werden, dass die Kriterien möglichst gut erfüllt werden.

Im vorliegenden Ausführungsbeispiel wird das Rechenmodul NN mittels eines Verfahrens des bestärkenden Lernens darauf trainiert, das technische System TS optimiert zu steuern. Dabei wird das Rechenmodul NN darauf trainiert, anhand von als Eingabeparameter zugeführten Betriebsdaten des technischen Systems TS optimierte Steueraktionsdaten OAD als Ausgabeparameter auszugeben, die eine Zielfunktion RF optimieren. Für derartige Lernverfahren steht eine Vielzahl von bekannten Standardroutinen zur Verfügung.

Die Zielfunktion RF berechnet aus zugeführten Betriebsdaten einen Performanzparameter PP, der durch das genannte Lernverfahren zu optimieren ist. Zu diesem Zweck werden die durch die Zielfunktion RF berechneten Werte des Performanzparameters PP dem Rechenmodul NN zugeführt, wie in Figur 2 durch einen strichlierten Pfeil angedeutet ist. Damit wird die Trainingsstruktur des neuronalen Netzes mittels des Lernverfahrens derart angepasst, dass die Ausgabeparameter OAD des neuronalen Netzes den Performanzparameter PP optimieren.

Durch den Performanzparameter PP wird ein erwünschtes Verhalten des technischen Systems TS quantifiziert. So kann als Performanzparameter PP beispielsweise eine ggf. gewichtete Kombination von Ertrag, Ausbeute, Wirkungsgrad, Schadstoffausstoß, Verschleiß und Ressourcenverbrauch des technischen Systems TS oder eines Teils davon oder ein anderer eine Performanz des technischen Systems TS betreffender Parameter verwendet werden. Durch Optimierung des Performanzparameters PP wird das Rechenmodul NN auf eine Ausgabe von optimierten Steueraktionsdaten OAD trainiert und so die Steuereinrichtung CTL für eine optimierte Steuerung des technischen Systems TS konfiguriert.

Eine Zielfunktion, hier RF, zur Berechnung eines Performanzparameters, hier PP, wird häufig auch als Belohnungsfunktion oder Reward Function bezeichnet. Der Performanzparameter gibt dabei vorzugsweise einen langfristigen Gewinn oder eine Gesamtbelohnung an.

Die in die Zielfunktion RF eingehenden Betriebsdaten werden häufig auch als Targetdaten bezeichnet und sind in der Regel ein Teil der in den Betriebsdaten enthaltenen Zustandsdaten des technischen Systems TS. Zur Berechnung von Performanzparametern aus Targetdaten des technischen Systems TS ist eine Vielzahl von Verfahren bekannt.

Es erweist sich, dass ein Trainingserfolg des Rechenmoduls NN erheblich von einer Qualität der Trainingsdaten TD abhängig ist. In diesem Sinne soll erfindungsgemäß angestrebt werden, diejenigen Trainingsdaten zu finden und zu extrahieren, die für das Training oder den Trainingserfolg besonders nützlich sind.

Zur Selektion und Extraktion dieser trainingsfördernden Trainingsdaten enthält die Steuereinrichtung CTL ein Filter F, zu dem die Trainingsdaten TD(t) übermittelt werden. Das Filter F dient zu dem Zweck, Zeitintervalle oder Zeitfenster TF zu identifizieren, die bevorzugt trainingsfördernde Trainingsdaten enthalten und diese trainingsfördernden Trainingsdaten spezifisch zu extrahieren bzw. herauszufiltern.

Es erweist sich, dass diejenigen Trainingsdaten besonders trainingsfördernd sind, die Information über Auswirkungen von Steuereingriffen auf Zustände des technischen Systems TS enthalten. Durch Fokussierung des Lernverfahrens auf derartige Trainingsdaten können Wirkungszusammenhänge zwischen Steuereingriffen und deren Auswirkungen in der Regel erheblich schneller und effizienter erlernt werden. Somit erweist es sich als vorteilhaft, diejenigen Zeitfenster zu identifizieren oder beim Training zu bevorzugen, in denen Steueraktionen angewandt werden oder wechseln, d.h. in denen sich Steueraktionen zeitlich verändern.

Zum Feststellen einer zeitlichen Veränderung der Steueraktionen umfasst das Filter F einen Veränderungsdetektor DD, zu dem die zeitliche Abfolge der Steueraktionsdaten AD(t) übermittelt wird. Die Steueraktionsdaten AD(t) werden hierzu durch das Filter F aus den Trainingsdaten TD(t) spezifisch extrahiert.

Zur Detektion der zeitlichen Veränderung der Steueraktionsdaten AD(t) ermittelt der Veränderungsdetektor DD fortlaufend ein Veränderungsmaß D. Letzteres kann beispielsweise als Betrag einer Differenz aufeinanderfolgender Steueraktionsdaten |AD(t)-AD(t-1)| oder als Quadrat einer solchen Differenz (AD(t)-AD(t-1))² berechnet werden. Bei mehrkomponentigen Steueraktionsdaten AD(t) können entsprechend mehrdimensionale euklidische oder gewichtete Abstände aufeinanderfolgender Steueraktionsvektoren als Veränderungsmaß D ermittelt werden.

Der Veränderungsdetektor DD vergleicht die fortlaufend ermittelten Veränderungsmaße D mit einem vorgegebenen oder anderweitig bestimmten Schwellwert TH und stellt infolge einer Überschreitung dieses Schwellwerts TH eine zeitliche Veränderung der Steueraktionsdaten AD(t) fest. Bei mehrkomponentigen Steueraktionsdaten können entsprechend komponentenspezifische Schwellwerte vorgesehen sein. Alternativ oder zusätzlich kann der Veränderungsdetektor DD die Abfolge der Steueraktionsdaten AD(t) nach einem vorgegebenen oder anderweitig bestimmten Veränderungsmuster durchsuchen und infolge des Auftretens dieses Veränderungsmusters eine zeitliche Veränderung der Steueraktionsdaten AD(t) feststellen.

Infolge einer Feststellung einer jeweiligen Veränderung wird eine jeweilige Veränderungsstelle in der Abfolge der Steueraktionsdaten AD(t) ermittelt. Im vorliegenden Ausführungsbeispiel wird als jeweilige Veränderungsstelle ein jeweiliger Veränderungszeitpunkt tₛ ermittelt, an dem der Schwellwert TH durch das jeweilige Veränderungsmaß D überschritten wird.

Die ermittelten Veränderungszeitpunkte tₛ werden vom Veränderungsdetektor DD zu einem Selektionsmodul SEL des Filters F übermittelt. Zu diesem Selektionsmodul SEL wird auch die Abfolge der Trainingsdaten TD(t) übermittelt. Das Selektionsmodul SEL ermittelt anhand der Veränderungszeitpunkte tₛ jeweils ein Zeitfenster TF, das den jeweiligen Veränderungszeitpunkt tₛ umfasst. Vorzugsweise wird das jeweilige Zeitfenster TF um den jeweiligen Veränderungszeitpunkt tₛ herum zentriert. In diesem Fall ergibt sich als Zeitfenster das Zeitintervall TF(tₛ)=[tₛ-L/2, tₛ+L/2], wobei L eine Länge des Zeitfensters TF bezeichnet.

Die Länge L des Zeitfensters kann je nach dem zu steuernden technischen System TS abhängig von einer Reaktionszeit von dessen Sensoren, einer Reaktionszeit auf Steuerungsmaßnahmen, einer Änderungszeit von Umgebungsbedingungen oder abhängig von einer anderen für die Steuerung des technischen System TS maßgeblichen Zeitskala festgelegt werden. Bei Gasturbinen oder Windturbinen kann vorzugsweise ein Länge L von einer Sekunde bis drei oder mehr Minuten, insbesondere eine Länge von 30 bis 60 Sekunden vorgesehen sein.

Vorzugsweise können der Schwellwert TH sowie die Länge L abhängig von einer Analyse der zeitlichen Veränderungen der Abfolge der Steueraktionsdaten AD(t) bestimmt werden. So können z.B. eine Rate und/oder eine Amplitude der Schwankungen der Steueraktionsdaten AD(t) ermittelt werden und der Schwellwert TH und die Länge L abhängig davon berechnet oder modifiziert werden. Insbesondere kann bei größeren Amplituden ein kleinerer Schwellwert TH und bei höheren Raten eine geringere Länge L festgelegt werden.

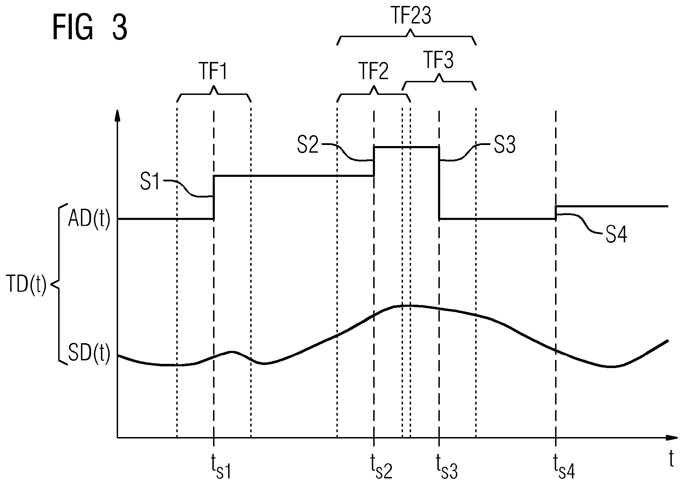

Die Ermittlung der Zeitfenster TF wird anhand von Figur 3 weiter veranschaulicht. Figur 3 zeigt ein Diagramm, in dem eine Abfolge von Trainingsdaten TD(t) gegen die Zeit t aufgetragen ist. Die Trainingsdaten TD(t) umfassen Zustandsdaten SD(t), die im unteren Teil des Diagramms veranschaulicht sind und Steueraktionsdaten AD(t), die im oberen Teil veranschaulicht sind. Aus Übersichtlichkeitsgründen ist nur jeweils ein Verlauf eines einzigen Werts in stark vereinfachter Weise dargestellt.

Die Abfolge der Steueraktionsdaten AD(t) zeigen mehrere zeitliche Veränderungen S1, S2, S3 und S4 zu den Zeitpunkten tₛ₁, tₛ₂, tₛ₃ und tₛ₄. Bei den Veränderungszeitpunkten tₛ₁, tₛ₂ sowie tₛ₃ liegt das ermittelte Veränderungsmaß D oberhalb des Schwellwerts TH, bei tₛ₄ darunter. Die Veränderung S4 wird infolgedessen verworfen und definiert mithin kein Zeitfenster. Dagegen definieren die zeitliche Veränderung S1 bzw. der Zeitpunkt tₛ₁ ein Zeitfenster TF1, die Veränderung S2 bzw. der Zeitpunkt tₛ₂ ein Zeitfenster TF2 und die Veränderung S3 bzw. der Zeitpunkt tₛ₃ ein Zeitfenster TF3. Die Zeitfenster TF2 und TF3 überlappen sich und werden infolgedessen zu einem gemeinsamen Zeitfenster TF23=[tₛ₃-L/2, tₛ₃+L/2] zusammengefasst.

Der weitere Verlauf des erfindungsgemäßen Verfahrens wird wieder anhand von Figur 2 veranschaulicht.

Anhand der ermittelten Zeitfenster TF selektiert und extrahiert das Selektionsmodul SEL spezifisch diejenigen der Trainingsdaten TD(t), die sich innerhalb dieser Zeitfenster TF befinden. Diese innerhalb der Zeitfenster TF befindlichen Trainingsdaten werden im Folgenden als extrahierte oder gefilterte Trainingsdaten FTD bezeichnet. Für ein den Veränderungszeitpunkt tₛ umfassendes (nicht überlappendes) Zeitfenster TF können die extrahierten Trainingsdaten beispielsweise gegeben sein durch FTD = {TD(tₛ-L/2),..., TD(tₛ+L/2)}.

Die zeitfensterspezifisch selektierten und gefilterten Trainingsdaten FTD werden vom Selektionsmodul SEL bzw. vom Filter F zum Rechenmodul NN übermittelt. Weiterhin werden die gefilterten Trainingsdaten FTD der Zielfunktion RF zugeführt, die aus den in den extrahierten Trainingsdaten FTD enthaltenen Betriebsdaten und insbesondere aus den darin enthaltenen Zustandsdaten den Performanzparameter PP berechnet. Anhand der extrahierten Trainingsdaten FTD sowie dem berechneten Performanzparameter PP wird das neuronale Netz des Rechenmoduls NN, wie oben bereits angedeutet, derart trainiert, dass Steueraktionsdaten OAD ausgegeben werden, die - wenn auf das technische Systems TS angewandt -, den Performanzparameter PP optimieren.

Im vorliegenden Ausführungsbeispiel werden dem Rechenmodul NN keine außerhalb der Zeitfenster TF befindlichen Trainingsdaten zugeführt und das neuronale Netz damit ausschließlich anhand der extrahierten Trainingsdaten FTD trainiert. Wie oben bereits erwähnt, kann alternativ oder zusätzlich zum neuronalen Netz insbesondere ein Verfahren des bestärkenden Lernens im Rechenmodul NN implementiert sein. Insofern sich Trainingsdaten als besonders trainingsfördernd erweisen, die sich in zeitlicher Nähe zu Steuereingriffen bzw. Veränderungen der Steueraktionsdaten befinden, kann in der Regel ein Trainingserfolg verbessert bzw. ein Trainingsaufwand verringert werden.

Alternativ können dem Rechenmodul NN auch außerhalb der Zeitfenster befindliche Trainingsdaten zugeführt werden. In diesem Fall kann das Rechenmodul NN zumindest bevorzugt oder überwiegend anhand der gefilterten Trainingsdaten FTD trainiert werden. So können die gefilterten Trainingsdaten FTD beim Training stärker gewichtet werden als die außerhalb der Zeitfenster befindlichen Trainingsdaten oder letztere können reduziert, ausgedünnt und/oder teilweise verworfen werden.

Anhand der extrahierten Trainingsdaten FTD und deren Anteil an einer Gesamtheit der Trainingsdaten TD kann ein Qualitätsmaß für die Trainingsdaten TD abgeleitet werden. Ein derart bestimmtes Qualitätsmaß kann gewissermaßen eine für das Training relevante Informationsdichte quantifizieren.

Vorzugsweise können fortlaufend und aktuell erfasste Trainingsdaten TD(t) durch das Filter F fortlaufend gefiltert werden und die Steuereinrichtung CTL im laufenden Betrieb anhand der gefilterten Trainingsdaten FTD weitertrainiert werden.

Optional kann zwischen dem Filter F und dem Rechenmodul NN ein Aggregator (nicht dargestellt) zwischengeschaltet sein, der die gefilterten Trainingsdaten FTD vorzugsweise zeitfensterweise aggregiert, d.h. zusammenfasst und/oder reduziert. Die aggregierten Trainingsdaten werden dann zum Training an das Rechenmodul NN übermittelt. Die Aggregation kann beispielsweise durch Bilden eines Mittelwerts, eines Median, eines Minimums und/oder eines Maximums über einen vorgegebenen Abschnitt der Abfolge der gefilterten Trainingsdaten FTD erfolgen.

Indem das neuronale Netz und damit das Rechenmodul NN trainiert wird, wird die Steuereinrichtung CTL für eine optimierte Steuerung des technischen Systems TS konfiguriert. Beim Steuern wendet die Steuereinrichtung CTL die durch das Training erlernte Steuerstrategie an, d.h. bildet aktuelle Systemzustände auf hinsichtlich der Zielfunktion RF optimale Steueraktionen ab.

Durch die spezifische Filterung der Trainingsdaten wird das Rechenmodul NN durch besonders trainingsfördernde Trainingsdaten trainiert. Diese selektierten Trainingsdaten FTD enthalten besonders viele Korrelationen zwischen Steuereingriffen und deren Auswirkungen auf Systemzustände des technischen Systems TS und sind damit besonders repräsentativ für dessen Steuerung. Durch die spezifische Selektion der Trainingsdaten kann effektiv vermieden werden, dass redundante, weniger relevante oder weniger signifikante Information den Lernprozess stört oder verzögert. Es zeigt sich, dass durch die erfindungsgemäße Filterung der Trainingsdaten ein Trainingserfolg signifikant verbessert bzw. ein Trainingsaufwand signifikant verringert werden kann.

## Patentansprüche

1. Verfahren zum Konfigurieren einer Steuereinrichtung (CTL) für ein technisches System (TS) mittels eines maschinellen Lernverfahrens, wobei
a) eine zeitliche Abfolge von Trainingsdaten (TD) für das maschinelle Lernverfahren erfasst wird, wobei die Trainingsdaten (TD) Zustände des technischen Systems (TS) spezifizierende Zustandsdaten (SD) sowie Steueraktionen des technischen Systems (TS) spezifizierende Steueraktionsdaten (AD) umfassen,
b) aus den Trainingsdaten (TD) eine zeitliche Abfolge der Steueraktionsdaten (AD) spezifisch extrahiert wird,
c) die Abfolge der Steueraktionsdaten (AD) auf eine zeitliche Veränderung geprüft wird, und bei Feststellen einer zeitlichen Veränderung ein diese Veränderung umfassendes Zeitfenster (TF) ermittelt wird,
d) die innerhalb des Zeitfensters (TF) befindlichen Trainingsdaten (FTD) zeitfensterspezifisch extrahiert werden,
e) die Steuereinrichtung (CTL) mittels des maschinellen Lernverfahrens anhand der extrahierten Trainingsdaten (FTD) trainiert und damit zum Steuern des technischen Systems (TS) konfiguriert wird, und
f) außerhalb des Zeitfensters (TF) befindliche Trainingsdaten beim Trainieren der Steuereinrichtung (CTL) unterdrückt oder verworfen werden oder geringer gewichtet werden als die extrahierten Trainingsdaten (FTD).

2. Verfahren nach Anspruch 1, **dadurch gekennzeichnet,**
**dass** das technische System (TS) eine Gasturbine, eine Windturbine, ein Solarkraftwerk, eine Verbrennungskraftmaschine, eine Fertigungsanlage, ein Verkehrsleitsystem, eine Energiesteuerung für ein Gebäude, ein Energieübertragungsnetz und/oder ein 3d-Drucker ist.

3. Verfahren nach einem der vorhergehenden Ansprüche, **dadurch gekennzeichnet,**
**dass** das maschinelle Lernverfahren ein Verfahren des bestärkenden Lernens, ein künstliches neuronales Netz, ein rekurrentes neuronales Netz, ein faltendes neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum verwendet oder implementiert.

4. Verfahren nach einem der vorhergehenden Ansprüche, **dadurch gekennzeichnet,**
**dass** Betriebsdaten (BD) des technischen Systems (TS) im laufenden Betrieb erfasst und in die Abfolge der Trainingsdaten (TD) integriert werden, und
**dass** die Steuereinrichtung (CTL) anhand der extrahierten Trainingsdaten (FTD) im laufenden Betrieb weitertrainiert wird.

5. Verfahren nach einem der vorhergehenden Ansprüche, **dadurch gekennzeichnet,**
**dass** bei der Prüfung auf zeitliche Veränderung der Abfolge der Steueraktionsdaten (AD) ein vorgegebenes Veränderungsmuster in dieser Abfolge gesucht wird, und
**dass** infolge eines Auffindens des Veränderungsmusters die zeitliche Veränderung festgestellt wird.

6. Verfahren nach einem der vorhergehenden Ansprüche, **dadurch gekennzeichnet,**
**dass** bei der Prüfung auf zeitliche Veränderung der Abfolge der Steueraktionsdaten (AD) ein Veränderungsmaß (D) abhängig von einem Vergleich, einer Differenzbildung, einer gewichteten Differenzbildung und/oder einem Differenzenquotienten von verschiedenen Zeiten zugeordneten Steueraktionsdaten (AD) ermittelt wird, und
**dass** die Feststellung einer zeitlichen Veränderung anhand des ermittelten Veränderungsmaßes (D) erfolgt.

7. Verfahren nach Anspruch 6, **dadurch gekennzeichnet,**
**dass** die Steueraktionsdaten (AD) jeweils mehrere Komponenten umfassen, und
**dass** für die Komponenten der Steueraktionsdaten (AD) jeweils ein komponentenspezifisches Veränderungsmaß ermittelt wird.

8. Verfahren nach einem der vorhergehenden Ansprüche, **dadurch gekennzeichnet,**
**dass** eine Rate und/oder eine Amplitude von zeitlichen Veränderungen der Abfolge der Steueraktionsdaten (AD) ermittelt wird, und
**dass** eine Länge des Zeitfensters (TF) und/oder ein Schwellwert (TH) zum Vergleich mit einem Veränderungsmaß (D) der zeitlichen Veränderungen abhängig von der ermittelten Rate und/oder Amplitude festgelegt wird.

9. Verfahren nach einem der vorhergehenden Ansprüche, **dadurch gekennzeichnet,**
**dass** eine Zielfunktion (RF) bereitgestellt wird, die abhängig von zumindest einem Teil der Zustandsdaten (SD) einen im Betrieb des technischen Systems (TS) zu optimierenden Performanzparameter (PP) ermittelt, und
**dass** die Steuereinrichtung (CTL) anhand des in den extrahierten Trainingsdaten (FTD) enthaltenen Teils der Zustandsdaten (SD) darauf trainiert wird, den Performanzparameter (PP) zu optimieren.

10. Verfahren nach einem der vorhergehenden Ansprüche,
**dadurch gekennzeichnet,**
**dass** ein Anteil der extrahierten Trainingsdaten (FTD) an den Trainingsdaten (TD) ermittelt wird, und
**dass** abhängig vom ermittelten Anteil ein Qualitätsmaß für die Trainingsdaten (TD) ermittelt und zum Steuern des technischen Systems (TS) ausgegeben wird.

11. Verfahren nach einem der vorhergehenden Ansprüche, **dadurch gekennzeichnet,**
**dass** die extrahierten Trainingsdaten (FTD) mittels einer Aggregationsfunktion aggregiert werden, und
**dass** das Training anhand der aggregierten Trainingsdaten erfolgt.

12. Steuereinrichtung (CTL) zum Steuern eines technischen Systems (TS), eingerichtet zum Ausführen eines Verfahrens nach einem der vorhergehenden Ansprüche.

13. Computerprogrammprodukt eingerichtet zum Ausführen eines Verfahrens nach einem der Ansprüche 1 bis 11.

14. Computerlesbares Speichermedium mit einem Computerprogrammprodukt nach Anspruch 13.

## Claims

1. Method for configuring a control device (CTL) for a technical system (TS) by means of a machine learning method, wherein
a) a temporal sequence of training data (TD) for the machine learning method is captured, the training data (TD) comprising state data (SD), which specify states of the technical system (TS), and control action data (AD), which specify control actions of the technical system (TS),
b) a temporal sequence of the control action data (AD) is specifically extracted from the training data (TD),
c) the sequence of the control action data (AD) is checked for a change over time, and detection of a change over time results in a time window (TF) that encompasses that change being ascertained,
d) the training data (FTD) situated within the time window (TF) are extracted on a time-window-specific basis,
e) the control device (CTL) is trained on the basis of the extracted training data (FTD) by means of the machine learning method and thus configured to control the technical system (TS), and
f) training data situated outside the time window (TF) are suppressed or rejected, or are provided with a lower weighting than the extracted training data (FTD), during the training of the control device (CTL).

2. Method according to Claim 1, **characterized**
**in that** the technical system (TS) is a gas turbine, a wind turbine, a solar power station, an internal combustion engine, a production plant, a traffic control system, an energy control unit for a building, a power transmission system and/or a 3D printer.

3. Method according to either one of the preceding claims, **characterized**
**in that** the machine learning method uses or implements a reinforcement learning method, an artificial neural network, a recurrent neural network, a convolutional neural network, an autoencoder, a deep learning architecture, a support vector machine, a data-driven trainable regression model, a k nearest neighbour classifier, a physical model and/or a decision tree.

4. Method according to any one of the preceding claims, **characterized**
**in that** operating data (BD) of the technical system (TS) are captured in the course of operation and integrated into the sequence of the training data (TD), and
**in that** the control device (CTL) continues to be trained on the basis of the extracted training data (FTD) in the course of operation.

5. Method according to any one of the preceding claims, **characterized**
**in that** the check for a change in the sequence of the control action data (AD) over time involves a stipulated change pattern being sought in that sequence, and
**in that** the change over time is detected as a result of the change pattern being found.

6. Method according to any one of the preceding claims, **characterized**
**in that** the check for a change in the sequence of the control action data (AD) over time involves a measure of change (D) being ascertained on the basis of a comparison, a difference formation, a weighted difference formation and/or a difference quotient for control action data (AD) associated with various times, and
**in that** a change over time is detected on the basis of the ascertained measure of change (D).

7. Method according to Claim 6, **characterized**
**in that** the control action data (AD) each comprise multiple components, and
**in that** a component-specific measure of change is ascertained for each of the components of the control action data (AD).

8. Method according to any one of the preceding claims, **characterized**
**in that** a rate and/or an amplitude of changes in the sequence of the control action data (AD) over time is ascertained, and
**in that** a length of the time window (TF) and/or a threshold value (TH) for comparison with a measure of change (D) for the changes over time is defined on the basis of the ascertained rate and/or amplitude.

9. Method according to any one of the preceding claims, **characterized**
**in that** a target function (RF) is provided, which takes at least a portion of the state data (SD) as a basis for ascertaining a performance parameter (PP) to be optimized during operation of the technical system (TS), and
**in that** the control device (CTL) is trained to optimize the performance parameter (PP) on the basis of the portion of the state data (SD) that is contained in the extracted training data (FTD).

10. Method according to any one of the preceding claims, **characterized**
**in that** a share of the extracted training data (FTD) in the training data (TD) is ascertained, and
**in that** the ascertained share is taken as a basis for ascertaining a measure of quality for the training data (TD) and outputting said measure of quality to control the technical system (TS).

11. Method according to any one of the preceding claims, **characterized**
**in that** the extracted training data (FTD) are aggregated by means of an aggregation function, and
**in that** the training is carried out on the basis of the aggregated training data.

12. Control device (CTL) for controlling a technical system (TS), designed to carry out a method according to one of the preceding claims.

13. Computer program product designed to carry out a method according to one of Claims 1 to 11.

14. Computer-readable storage medium containing a computer program product according to Claim 13.

## Revendications

1. Procédé pour la configuration d'un dispositif de commande (CTL) pour un système technique (TS) au moyen d'un procédé d'apprentissage automatique, dans lequel
a) une séquence temporelle de données d'entraînement (TD) pour le procédé d'apprentissage automatique est collectée, dans lequel les données d'entraînement (TD) comportent des données d'état (SD) spécifiant des états du système technique (TS) ainsi que des données d'action de commande (AD) spécifiant des actions de commande du système technique (TS),
b) une séquence temporelle des données d'action de commande (AD) est extraite spécifiquement des données d'entraînement (TD),
c) la séquence des données d'action de commande (AD) est vérifiée quant à une modification au cours du temps, et lors de la constatation d'une modification au cours du temps, une fenêtre temporelle (TF) comportant cette modification est déterminée,
d) les données d'entraînement (FTD) se trouvant à l'intérieur de la fenêtre temporelle (TF) sont extraites de manière spécifique à la fenêtre temporelle,
e) le dispositif de commande (CTL) est entraîné au moyen du procédé d'apprentissage automatique à l'aide des données d'entraînement extraites (FTD) et ainsi configuré pour la commande du système technique (TS), et
f) des données d'entraînement se trouvant à l'extérieur de la fenêtre temporelle (TF) sont supprimées ou rejetées ou sont pondérées plus faiblement que les données d'entraînement extraites (FTD), lors de l'entraînement du dispositif de commande (CTL).

2. Procédé selon la revendication 1, **caractérisé**
**en ce que** le système technique (TS) est une turbine à gaz, une éolienne, une centrale électrique solaire, un moteur à combustion interne, une usine de production, un système de régulation du trafic, une unité de contrôle de l'énergie pour un bâtiment, un réseau de transmission d'énergie et/ou une imprimante 3D.

3. Procédé selon l'une des revendications précédentes, **caractérisé**
**en ce que** le procédé d'apprentissage automatique utilise ou met en œuvre un procédé de l'apprentissage par renforcement, un réseau neuronal artificiel, un réseau neuronal récurrent, un réseau neuronal convolutif, un auto-encodeur, une architecture d'apprentissage profond (« *Deep-Learning* »), une machine à vecteurs de support, un modèle de régression entraînable sur la base de données, un classificateur des k plus proches voisins, un modèle physique et/ou un arbre décisionnel.

4. Procédé selon l'une des revendications précédentes, **caractérisé**
**en ce que** des données de fonctionnement (BD) du système technique (TS) sont collectées en cours de fonctionnement et intégrées dans la séquence des données d'entraînement (TD), et
**en ce que** le dispositif de commande (CTL) continue à être entrainé en cours de fonctionnement à l'aide des données d'entraînement extraites (FTD).

5. Procédé selon l'une des revendications précédentes, **caractérisé**
**en ce que**, lors de la vérification quant à une modification au cours du temps de la séquence des données d'action de commande (AD), un motif de modification prédéfini est recherché dans cette séquence, et
**en ce que**, à la suite d'une identification du motif de modification, la modification au cours du temps est constatée.

6. Procédé selon l'une des revendications précédentes, **caractérisé**
**en ce que**, lors de la vérification quant à une modification au cours du temps de la séquence des données d'action de commande (AD), une mesure de modification (D) est déterminée en fonction d'une comparaison, d'une formation de différence, d'une formation de différence pondérée et/ou d'un quotient de différences de données d'action de commande (AD) associées à des moments différents, et
**en ce que** la constatation d'une modification au cours du temps s'effectue à l'aide de la mesure de modification (D) déterminée.

7. Procédé selon la revendication 6, **caractérisé**
**en ce que** les données d'action de commande (AD) comportent respectivement plusieurs composantes, et
**en ce que**, pour les composantes des données d'action de commande (AD), respectivement une mesure de modification spécifique à la composante est déterminée.

8. Procédé selon l'une des revendications précédentes, **caractérisé**
**en ce qu'**un taux et/ou une amplitude de modifications au cours du temps de la séquence des données d'action de commande (AD) sont déterminés, et
**en ce qu'**une longueur de la fenêtre temporelle (TF) et/ou une valeur de seuil (TH) pour la comparaison à une mesure de modification (D) des modifications au cours du temps sont fixées en fonction du taux et/ou de l'amplitude déterminés.

9. Procédé selon l'une des revendications précédentes, **caractérisé**
**en ce qu'**il est fourni une fonction cible (RF), laquelle détermine, en fonction d'au moins une partie des données d'état (SD), un paramètre de performance (PP) à optimiser dans le fonctionnement du système technique (TS), et
**en ce que** le dispositif de commande (CTL) est entraîné, à l'aide de la partie des données d'état (SD) contenue dans les données d'entraînement extraites (FTD), à optimiser le paramètre de performance (PP).

10. Procédé selon l'une des revendications précédentes, **caractérisé**
**en ce qu'**une proportion des données d'entraînement extraites (FTD) dans les données d'entraînement (TD) est déterminée, et en ce que, en fonction de la proportion déterminée, une mesure de qualité pour les données d'entraînement (TD) est déterminée et émise en sortie pour la commande du système technique (TS).

11. Procédé selon l'une des revendications précédentes, **caractérisé**
**en ce que** les données d'entraînement extraites (FTD) sont agrégées au moyen d'une fonction d'agrégation, et
**en ce que** l'entraînement s'effectue à l'aide des données d'entraînement agrégées.

12. Dispositif de commande (CTL) pour la commande d'un système technique (TS), conçu pour l'exécution d'un procédé selon l'une des revendications précédentes.

13. Produit de programme informatique conçu pour l'exécution d'un procédé selon l'une des revendications 1 à 11.

14. Support de stockage lisible par ordinateur avec un produit de programme informatique selon la revendication 13.
